# EUROPÄISCHE PATENTSCHRIFT

(11) **EP 3 649 205 B1**
(45) Veröffentlichungstag und Bekanntmachung des Hinweises auf die Patenterteilung: **12.11.2025**
(21) Anmeldenummer: 18737522.5
(22) Anmeldetag: 26.06.2018
(51) Int. Cl.: C09J 7/25, C08K 3/013

(54) **SELBSTKLEBENDES KLEBEBAND MIT SPALTFESTEM PET-TRÄGER**
SELF-ADHESIVE TAPE COMPRISING A PET SUBSTRATE WITH HIGH LAMINAR STRENGTH
RUBAN AUTOADHÉSIF DOTÉ D'UN SUPPORT EN PET RÉSISTANT AU FISSURAGE

(30) Priorität: 06.07.2017 DE 102017006359
(43) Veröffentlichungstag der Anmeldung: 13.05.2020
(73) Patentinhaber: TESA SE, 22848 Norderstedt (DE)
(72) Erfinder: MAATZ, Gero, 22848 Norderstedt (DE); NEUBERT, Ingo, 22848 Norderstedt (DE); MÜSSIG, Bernhard, 21218 Seevetal (DE)
(74) Vertreter: tesa SE
(86) Internationale Anmeldenummer: PCT/EP2018/067016
(87) Internationale Veröffentlichungsnummer: WO 2019/007747

(56) Entgegenhaltungen:
- EP-A1- 2 110 242
- EP-A2- 1 358 078
- DE-T2- 69 932 245
- JP-A- 2002 080 705

## Beschreibung

Die Erfindung betrifft ein Klebeband, enthaltend eine Trägerfolie, umfassend mindestens eine Folienschicht, und mindestens eine Haftklebemassenschicht, wobei die Trägerfolie biaxial verstreckt ist und mindestens eine der mindestens einen Folienschicht 80 bis 99 Gew.-% Polyethylenterephthalat als Basispolymer und 1 bis 20 Gew.-% eines Additivpolymers, nämlich ein Homo- oder Copolymerisat von Polybutylenterephthalat, enthält, und dass die mindestens eine Folienschicht des Weiteren mindestens ein Farbpigment enthält, wobei die Gewichtsanteile jeweils auf die Polymerkomponente bezogen sind, sowie die Verwendung dieses Klebebandes.

Eine wichtige Eigenschaft von Trägerfolien, die in Klebebändern zum Einsatz kommen, ist deren Spaltfestigkeit. Die Spaltfestigkeit in den drei Raumrichtungen kann dabei unterschiedlich sein und unterschiedlich beeinflusst werden. Durch die Verstreckung von Folien in x- und y-Richtung beispielsweise kommt es zu einer Erhöhung der Festigkeit in diesen Richtungen aber entsprechend zu einer Schwächung der Festigkeit in z-Richtung (senkrecht zur Folienebene). So ist eine Schwächung in der Spaltfestigkeit bei kommerziell verfügbaren biaxial verstreckten Polypropylen-Folien in z-Richtung - speziell durch Schockbelastung - allgemein bekannt. Bei Polyesterfolien (PET-Folien) hingegen ist dieser Effekt kaum bekannt, da die Spaltfestigkeit von Polyesterfolien vergleichsweise sehr hoch ist. Im Zuge der Verwendung von Haftklebern mit sehr hoher Klebkraft zum Verklebungsuntergrund wurde festgestellt, dass es bei Klebebändern mit solchen Haftklebern bei Krafteinwirkung durchaus zum Spalten der Folie kommt. Dies gilt insbesondere für Klebbänder mit pigmentierter Folie zum Beispiel mit Ruß oder Titandioxid.

Für mobile Elektronikgüter werden sehr häufig Kunststoff- oder Glasfenster eingesetzt.

Bekannte Beispiele sind zum Beispiel PDAs, Tablets oder Mobilfunktelefone (Smartphones). Die Fenster haben die Aufgabe, das darunter liegende Display zu schützen. Übliche Materialien neben Glas sind zum Beispiel Polymethylmethacrylat oder Polycarbonat. Eine Basisfunktion des Fensters ist die hohe Transparenz, damit das Bild aus der bildgebenden Einheit (Display) möglichst unverfälscht und ohne Lichtintensitätsverluste an den Betrachter weitergegeben wird. Die Fenster können noch weitere Zusatzfunktionen aufweisen. So werden zum Beispiel oftmals Antikratzlacke aufgetragen, damit bei häufiger Nutzung das Fenster nicht verkratzt. Andere Sonderfunktionen umfassen zum Beispiel Spiegelfunktionen, die zum Beispiel durch Metallisierung des Fensters erreicht werden können. Die Fenster werden an mindestens zwei Seiten mittels eines Haftklebebands an dem Gehäuse befestigt. Hierzu wird üblicherweise ein passgenauer Stanzling eines Haftklebebands verwendet. Gemeinhin werden zur Herstellung der Stanzlinge Haftklebebänder verwendet, die eine biaxial verstreckte PET-Folie enthalten, die auf beiden Seiten mit einer Acrylat-Haftklebemasse ausgerüstet sind. Solche Stanzlinge werden weiterhin zur Fixierung vom zum Beispiel Kameralinsen eingesetzt.

Es besteht der Trend, dass zum einen die verwendeten LCD- und OLED-Displays immer größer werden, zum anderen die Mobilfunktelefone immer flacher. Daraus resultieren zum einen immer größere Fenster, zum anderen immer kleinere Stegbreiten zur Verklebung, um so ebenfalls ein größeres effektives Display zu realisieren. Kleinere Verklebungsflächen erfordern höhere Klebkräfte der Haftklebmasseschichten und eine bessere Vorbehandlung zur Haftungserhöhung auf den zu verbindenden Teilen zum Beispiel durch Reinigung oder Primerung. Dies führt dazu, dass in manchen Fällen die Spaltfestigkeit der Folie zum Schwachpunkt des verklebten Verbundes wird. Dies gilt insbesondere für pigmentierte Folien. Dabei spaltet sich die Folie im Inneren in zwei Lagen, und auf den verklebten Teilen bleiben je eine dünne Klebmasseschicht sowie je eine Teil der Folienschicht zurück. Zudem erfordert der Trend zu immer dünneren elektronischen Geräten mit Display nicht nur immer stärker klebende Haftklebemassen, sondern auch eine geringere Schichtdicke wodurch die Dämpfung der Haftklebemassenschichten bei Schockbelastung abnimmt.

Außerdem steigt die Anforderung an die Verklebungsqualität. So weisen die Fenster heute üblicherweise ebenfalls eine Touchpanel-Funktion auf, über die das Mobilfunktelefon bedient werden kann. Weiterhin wird durch die Vielzahl der Funktionen neuer Mobilfunktelefone die Nutzung immer intensiver. Mit dieser Nutzung sind auch besondere Beanspruchungen verbunden. Gerade bei den Geräten mit größeren Displays besteht die Gefahr des Herausbrechens des Fensters oder sogar des ganzen Displays bei Schockbelastung durch zum Beispiel Stoß oder Herunterfallen. Hierbei kann es zum Versagen der Verklebung speziell durch Spalten der PET-Trägerfolie des Haftklebebands kommen. Aus Designgründen wird häufig gefordert, dass der Stanzling aus dem Haftklebeband blickdicht sein muss, also eine möglichst geringe Lichtdurchlässigkeit aufweist. Die Blickdichtigkeit wird durch die Verwendung einer mit Pigmenten wie zum Beispiel Ruß gefüllten PET-Trägerfolie erreicht. Die Verwendung von anorganischen Farbpigmenten führt jedoch zu einer zusätzlichen Schwächung der Spaltfestigkeit der Trägerfolie. Insbesondere neigen solche Folien besonders stark zum Spalten in z-Richtung. Der Fachmann weiß, dass biaxial verstreckte Polypropylenfolien eine sehr geringe Spaltfestigkeit aufweisen, insbesondere wenn diese Füllstoffe enthalten. Um die Füllstoffe können sich beim Verstrecken linsenförmige Vakuolen bilden, das heißt, die Folie weist im µm-Bereich schon Bereiche auf, in der die Folie in zwei Schichten aufgespalten ist. Deshalb gibt es Versuche, bei Polyesterfolie einen schwarzen organischen Farbstoff anstelle eines Pigmentes auf Rußbasis einzusetzen, um solche Effekte in der PET-Folie zu vermeiden. Leider ist die Lichtdichtigkeit bei dünnen Folien nicht zufriedenstellend. Eine Gefahr des Spaltens der PET-Trägerfolie besteht auch bei Maskingklebebändern für die Lackierung von Fahrzeugkarosserien. Das gilt insbesondere für Maskingklebebänder die längere Zeit erheblicher Temperaturbelastung der beim Einbrennen (Aushärten) der Automobillackschichten ausgesetzt sind. Beim Abziehen von der Kathodentauchlackierung besonders bei höheren Geschwindigkeiten kann es zum Spalten der Trägerfolie des Maskingklebebands

Zum Beispiel das Dokument DE 699 32 245 T2 offenbart Polymermischungen, welche Eigenschaften aufweisen, die bei Bandträger-Zusammensetzungen von Nutzen sind.

Aufgabe der vorliegenden Erfindung war es daher, ein Klebeband mit einer PET-Trägerfolie zur Verfügung zu stellen, die eine deutlich verbesserte Spaltfestigkeit aufweist, und zwar auch dann, wenn die Trägerfolie mit Pigmenten gefärbt ist. Überraschenderweise wurde bei Versuchen mit pigmentgefärbten Trägerfolien gefunden, dass ein bestimmter Rußmasterbatch in der Polyesterfolie die Spaltfestigkeit nicht verschlechtert, sondern verbessert. Bei näherer Untersuchung stellte sich heraus, dass das Bindemittel dieses Masterbatches nicht Polyethylenterephthalat (PET) sondern insbesondere Polybutylenterephthalat (PBT) ist.

Die Aufgabe, ein Klebeband mit einer PET-Trägerfolie mit deutlich verbesserter Spaltfähigkeit zur Verfügung zu stellen, wird daher dadurch gelöst, dass das Additivpolymer eine Glasübergangstemperatur T_{G} aufweist, die mindestens 10 K, vorzugsweise mindestens 20 K, unter der Glasübergangstemperatur T_{g} von Polyethylenterephthalat liegt.

Durch die Mitverwendung des als Additivpolymer bezeichneten zweiten Polymers mit geringerer Glasübergangstemperatur zusätzlich zum Polyethylenterephthalat (PET) zeichnet sich die biaxial verstreckte Trägerfolie durch eine höhere Spaltfestigkeit und damit das Klebeband durch eine höhere Reißfestigkeit aus.

Unter Additivpolymer wird ein Polymer verstanden, das dem Polyethylenterephthalat zugesetzt wird und nicht identisch mit ihm ist. Der Anteil des Additivpolymers in der Folie beträgt besonders bevorzugt 2 bis 15 Gew.-%, insbesondere 5 bis 10 Gew.-%, wobei die Gewichtsanteile jeweils auf die Polymerkomponente bezogen sind. Das Additivpolymer ist ein Homo- oder Copolymerisat von Polybutylenterephthalat.

Bei der Bestimmung der Glasübergangstemperatur T_{g} kann es zu abweichenden Ergebnissen kommen, wenn die Bestimmungsmethode nicht vergleichbar ist. Daher sind die Temperaturen folgender Literatur zu entnehmen: Polymer Handbook von J. Brandrup et al., 4. Ausgabe, Band 1, ISBN 0-471-48171-8. Sind mehrere Werte für ein Polymer angegeben, ist der Mittelwert zugrunde zu legen. Weist ein Additivpolymer mehrere Glasübergangstemperaturen auf, wie es bei Blockcopolymeren wie Hytrel^{™} der Fall ist, ist die niedrigere Temperatur maßgebend. Bei Polymeren, die dort nicht beschrieben sind, wird die Glasübergangstemperatur durch DSC ermittelt (Aufheizrate 20 K/min). Liefert auch diese Methode kein eindeutiges Ergebnis, so ist die Temperatur durch Berechnung festzustellen, wie es in Kapitel 6 von Properties of Polymers von D.W. van Krevelen, 4. Ausgabe, ISBN 978-0-08-054819-7 beschrieben ist.

Unter Polyethylenterephthalat im Sinne der vorliegenden Erfindung wird ein Polykondensat aus Ethylenglycol und Terephthalsäure verstanden, das vorzugsweise ein Homopolymer ist, aber auch in Abmischung oder pur als Copolymer zum Beispiel PET G^{™} vorliegen kann. In diesem Fall ist ein Comonomer wie zum Beispiel Diethylenglycol oder Cyclohexandioldimethanol enthalten in Anteilen vorzugsweise von maximal 5 Gew.-%, weiter vorzugsweise von maximal 1 Gew.-%.

Die Glasübergangstemperatur T_{g} von Polyethylenterephthalat (PET) beträgt 345 K.

Das Additivpolymer ist ein Polyester (außer Polyethylenterephthalat), nämlich ein Homo- oder Copolymer von Polybutylenterephthalat (PBT). Beispiel für Copolymere sind Blockcopolymere aus PBT und Polytetramethylenglycol (Handelsname zum Beispiel Hytrel^{™}).

Beispiele besonders geeigneter Additivpolymere unter Nennung der Glasübergangstemperatur:
- Polybutylenterephthalat (PBT), T_{g} = 333 K; PBT-Hersteller sind zum Beispiel:
   - Arnitel (DSM)
   - Celanex (Ticona)
   - Crastin (DuPont)
   - Pocan (Lanxess)
   - Ultradur (BASF)
   - Valox (Sabic Innovative Plastics)
   - VESTODUR (Evonik Industries AG)
- Hytrel^{™} Blockcopolymer, T_{g} = 230 K ± 40 K. Andere Tg Werte sind möglich.
- Polyisobutylenphthalat, T_{g} = 291 K
- Polybutylenadipat, T_{g} = 223 K
- Poly-3-hydroxybutyrat, T_{g} = 233 K
- Poly-4-hydroxybutyrat, T_{g} = 223 K
- SCONA TSPOE 1002 GBLL (Maleinsäureanhydrid gepfropftes Copolymer aus Ethylen und Octen von Byk Kometra GmbH); T_{g} = 218 K
- Poly(trimethyleneglycol)terephthalat, = 316 K

Eine weitere Gruppe geeigneter Additivpolymere sind Kern-Schale-Teilchen, wie sie als Zähigkeitsverbesserer in Hart-PVC, PMMA oder ABS verwendet werden. Die Herstellung wird zum Beispiel in US 6,605,672 B1 beschrieben. Es handelt sich um Teilchen, bestehend aus einem Kern aus einem in der Regel vernetztem Polymer mit niedriger Glasübergangstemperatur (gängige Monomere sind Butadien und Butylacrylat) und einer Hülle aus einem bei Raumtemperatur nicht klebrigen Polymer. Die Hülle mit hoher Glasübergangstemperatur hält das Additiv rieselfähig. Wegen UV- und thermischer Stabilität besonders geeignet sind solche Additive mit einem Kern aus Polybutylacrylat und einer Hülle aus ZB-21 ZB-50 von Zibo Huaxing Additives Co. Ltd., = 240 K.

Die Herstellung des erfindungsgemäßen Klebebandes erfolgt durch Extrusion von Polyethylenterephtalat und einem oder mehreren Additivpolymer(en) zu einer Primärfolie, biaxialer Verstreckung selbiger und Ausrüstung mit einer (Haft)Klebeschicht. Vorzugsweise wird die Folie nach der Verstreckung in einem heißen Kanal getempert (annealing), um den Schrumpf zu reduzieren. Die Haftklebeschicht wird vorzugsweise beidseitig durch Beschichten aufgebracht und basiert besonders bevorzugt auf Polyacrylat. In einer bevorzugten Ausführung wird die Haftklebeschicht durch Corona- oder Plasmabehandlung oder Aufbringung einer Primerschicht verankert. Eine bevorzugte Ausführungsform umfasst die Kaschierung der Trägerfolie mit einem Trennpapier oder einer Trennfolie (mit Silikonbeschichtung), wobei sich zwischen den beiden Komponenten eine Haftkleberschicht befindet. Eine weitere bevorzugte Ausführungsform umfasst eine Folie aus einer Mischung von Polyethylenterephthalat-Rohstoff mit einem pigmentierten Additivpolymer, insbesondere mit einem Masterbatch aus Ruß und Polybutylenterephthalat.

Biaxial verstrecke PET-Folien können weiterhin vorteilhafter Weise anorganische oder organische Partikel zur Einstellung der Oberflächentopographie oder Optik (Glanz, Trübung usw.) enthalten. Solche Partikel sind zum Beispiel Kalziumcarbonat, Apatit, Siliciumdioxid, Titandioxid, Aluminiumdioxid, vernetztes Polystyrol, vernetztes Polymethylmethacrylat, Zeolithe und andere Silikate wie Aluminiumsilikate. Diese Partikel - sogenannte Antiblockmittel - werden besonders in den Außenschichten zur Verbesserung der Wickeleigenschaften eingesetzt. Besonders bevorzugte Partikel sind hier Kalziumcarbonat oder Siliciumdioxid. Diese Verbindungen werden in der Regel in Mengen von 0,01 bis 5 Gew.-%, vorzugsweise von 0,01 bis 0,5 Gew.-% und idealerweise von 0,01 bis 0,3 Gew.-% eingesetzt. Die Anteile sind dabei auf das gesamte Folienmaterial bezogen.

Der Anteil an Partikeln, erfindungsgemäß Farbpigmenten in der Folienschicht, liegt vorzugsweise im Bereich von 0,5 bis 10 Gew.-%, weiter vorzugsweise im Bereich 1 bis 8 Gew.-%, bezogen auf das Gesamtgewicht der Folienschicht.

Die Zusammensetzung der Folienschicht ist dann insbesondere (die Gewichtsanteile jeweils auf das Gesamtgewicht der Folienschicht bezogen):
- 70 bis 98,5 Gew.-% Polyethylenterephthalat als Basispolymer, vorzugsweise 77 bis 97 Gew.-%
- 1 bis **20 Gew.-%** eines Additivpolymers, vorzugsweise 2 bis 15 Gew.-%
- 0,5 bis 10 Gew.-% Partikel, vorzugsweise Farbpigmente, vorzugsweise 1 bis 8Gew.-%

Gemäß einer Variante der Erfindung besteht die mindestens eine Folienschicht aus 80 bis 99 Gew.-% Polyethylenterephthalat als Basispolymer und 1 bis 20 Gew.-%, vorzugsweise 2 bis 15 Gew.-%, insbesondere 5 bis 10 Gew.-%, eines Additivpolymers, wobei die Gewichtsanteile jeweils auf die Polymerkomponente bezogen sind.

Die Teilchengröße (d₅₀) der eingesetzten Partikel, also der Medianwert, liegt in der Produktion im Allgemeinen zwischen 0,1 und 0,8 µm und bevorzugt zwischen 0,3 und 5,5 µm und besonders bevorzugt zwischen 0,5 und 2,5 µm. Werden Partikel mit einem d₅₀ größer 8 µm eingesetzt so wird der Eindruck einer grauen Oberfläche verstärkt und der Glanz der Folienoberfläche reduziert.

Die Partikelgrößenanalyse erfolgt mittels Laserbeugung (ISO13320-1 (1999)).

### Schwarze Folien

Biaxial orientierte Polyesterfolien sowie durch Ruß eingefärbte schwarze Polyesterfolien sind hinreichend bekannt und werden zum Beispiel in EP 2 631 263 A1 beschrieben. Neben Ruß als Schwarzpigment können erfindungsgemäß vorzugsweise auch Anilinschwarz, schwarzes Eisen(II,III)Oxid, Carbonnanotubes oder andere Pigmente zum Einfärben verwendet werden.

Für die Anforderung an die Lichtdichtigkeit ist die Trägerfolie schwarz eingefärbt vorzugsweise mit Ruß. Zur Vermeidung von Düsenablagerungen bei hohen Pigmentkonzentrationen besteht eine Ausführungsform als 3-Schicht-Folie aus einer schwarz eingefärbten Mittelschicht und zwei nicht eingefärbten Außenschichten. Das Additivpolymer befindet sich in der Mittelschicht. Optional kann auch mindestens eine der Außenschichten ein erfindungsgemäßes Additivpolymer enthalten. In einer bevorzugten Ausführungsform ist das Additivpolymer eingefärbt in Form eines Masterbatches, wobei das Additivpolymer die Matrix für das Pigment bildet, zum Beispiel, dadurch wird die Dosierung bei der Extrusion vereinfacht.

Carbon Black beziehungsweise Ruß führt zu einer Erhöhung der elektrischen Leiteigenschaften der Folie und besonders der Schmelze, was zu Schwierigkeiten bei der elektrostatischen Anlegung der extrudierten noch unverstreckten Folie auf die Chillroll führen kann. Aus diesem Grund enthält vorzugsweise keine Schicht mehr als 10 Gew.-% Ruß und idealerweise keine Schicht mehr als 8 Gew.-% Ruß. Ebenso kann ein hoher Rußgehalt in einer Schicht zur erhöhten Gefahr der Bildung von Rußagglomeraten führen, die als schwarze Einschlüsse in der Folie erkennbar sind.

Für die Einfärbung der Folie durch Ruß wird besonders Ruß verwendet, der nach dem Furnace-Prozess hergestellt wurde. Neben Industrierußen aus dem Furnace-Prozess können auch Ruße aus dem Channel-Acetylen oder dem Thermal-Prozess verwendet werden. Diese Verfahren werden unter anderem in EP 2 364 846 A1 beschrieben.

Eine gute Einarbeitung der Ruße zum Einfärben der Folie, mit einer geringen Anzahl an Agglomeraten, die als Stippen in Erscheinung treten, kann dann gewährleitet werden, wenn die verwendeten Ruße eine BET-Oberfläche (gemessen nach ASTM D 6556-04) von größer 40 und kleiner 500 m²/g, bevorzugt eine BET-Oberfläche von größer 100 und kleiner 250 m²/g aufweisen. Ebenso werden Ruße mit einer OAN (Oil-Absorption-Number, nach ASTM D 2414 mit DBP) von größer 40 und kleiner 200 ml/100 g bevorzugt.

Solche Ruße sind kommerziell erhältlich. Beispiele für geeignete Ruße sind Printex F 85 von Orion Engineered Carbons GmbH, Deutschland oder Black Pearls der Typen 4350 und 4750 von Cabot Inc., USA.

Die Transparenz der erfindungsgemäßen Folie soll vorzugsweise kleiner 8 %, bevorzugt kleiner 6 % und idealerweise kleiner 4,5 % sein. Eine höhere Transparenz der Folie führt zu einem geringeren Schwarzeindruck, was wiederum zu einem gelblich braunen Eindruck führen kann.

### Weiße Folien

Um Folien zu erhalten, die sich durch eine geringe Transparenz auszeichnen, kann man die Folien neben schwarzen Pigmenten auch mit weißen Pigmenten einfärben. Solche weißen Folien werden zum Beispiel in DE 10 2005 058 916 A1 oder JP-A-63-220421 beschrieben.

### Schwarz/weiße Folien

Eine Kombination aus schwarzer und weißer Schicht ist ebenfalls möglich. Um eine Folie mit niedriger Transparenz zu erhalten, ist ebenfalls eine mehrschichtige, zum Beispiel dreischichtige, Folie denkbar, die in einer oder in zwei der drei Schichten mit einem anderen Pigment eingefärbt ist als die dritte Schicht der Folie. Eine Polyesterfolie mit niedriger Transparenz, bestehend aus zwei weißen Außenschichten, die mindestens einen Weißgrad von 65 aufweisen, und einer Basisschicht, die mit Ruß eingefärbt ist, wird in EP 2 364 846 A1 beschrieben.

### Folienherstellung

Für die Herstellung der biaxial verstreckten Polyesterfolie wird üblicherweise Polyesterrohstoff (PET) mit einer Standardviskosität (SV als Maß für das Molekulargewicht) im Bereich von 700 bis 1200 verwendet. Besonders bevorzugt werden SV-Werte oberhalb von 800. Eine hohe Kettenlänge zu Beginn der Folienherstellung ist vorteilhaft, da sich daraus eine höhere Festigkeit beziehungsweise Zähigkeit der Folie ergibt sowie bei gleicher Abbaugeschwindigkeit eine erhöhte Lebensdauer der Polymerketten ergibt. SV-Werte < 600 sind hier zu vermeiden, da diese Polymerketten eine zu geringe Lebensdauer aufweisen. SV-Werte > 1200 weisen zwar eine hohe Lebensdauer auf, führen aber im Herstellungsprozess der Folie zu prozesstechnischen Problemen und damit zu Nachteilen im Bezug der Wirtschaftlichkeit des Prozesses. Die Herstellung von biaxial verstreckten Polyesterfolien ist Stand der Technik und wird in DE 10 2011 009 821 A1, EP 2 186 633 A1, EP 2 631 263 A1 und EP 2 364 846 A1 hinreichend beschrieben.

### Klebeband und (Haft)Klebmassen

Als Träger für das Klebeband können die beschriebenen Folien direkt eingesetzt werden, wobei in der Regel eine Fluor-, eine Plasmabehandlung eine Corona- oder auch Flammvorbehandlung der später mit der Klebmasse zu beschichtenden Seite erfolgt, um die Klebmasse besser auf dem Träger zu verankern. Ebenfalls kann die Oberfläche der Folie vor der Beschichtung mit einer entsprechenden Klebmasse mit Trichloressigsäure behandelt / geätzt werden, um die Verankerungskraft der Klebmasse zu erhöhen.

Eine weitere Verbesserung der Haftung gleichbedeutend mit der Verankerung der Klebmasse auf dem Träger (oder als Alternativbehandlung) kann durch den Einsatz von Primern (auch Haftvermittler genannt) erfolgen. Mit diesen kann zum einen die Oberflächenenergie zielführend eingestellt werden, und zum anderen zum Beispiel bei Verwendung von Isocyanat haltigen Primern eine chemische Anbindung der elastomeren Klebmassenkomponente an den Träger verfolgt werden.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).

Vorzugsweise ist die auf dem Trägermaterial ein- oder beidseitig aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch vom Haftgrund im Wesentlichen rückstandsfrei wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Um aus dem Träger ein Klebeband herzustellen, kann auf alle bekannten Klebemassensysteme zurückgegriffen werden. Neben den bevorzugten Polyacrylatklebemassen sind auch Klebemassen auf Basis von Natur- oder Synthesekautschuk- sowie Silikonklebemassen verwendbar.

Verwendbar sind Klebemassen auf Lösemittelbasis, auf wässriger Basis oder auch Hotmeltsystem. Auch eine Klebemasse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System. Das Aufkonzentrieren kann in entsprechend ausgerüsteten Kesseln oder Extrudern stattfinden, insbesondere beim damit einhergehenden Entgasen ist ein Entgasungsextruder bevorzugt. Eine derartige Klebemasse ist in der DE 43 13 008 A1 beschrieben, auf deren Inhalt hiermit Bezug genommen wird und deren Inhalt Teil dieser Offenbarung und Erfindung wird. Die Klebemasse auf Acrylathotmelt-Basis kann auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt. Der Restlösungsmittel-Gehalt sollte unter 1 Gew.-% betragen.

Besonders bevorzugt ist eine Ausführungsform unter Verwendung einer Haftklebemasse, die zumindest ein Polyacrylat enthält. Dabei handelt es sich um ein Polymerisat, das durch radikalische Polymerisation von Acrylmonomeren, worunter auch Methylacrylmonomere verstanden werden, und gegebenenfalls weiteren, copolymerisierbaren Monomeren erhältlich ist.

Bevorzugt handelt es sich um ein mit Epoxidgruppen vernetzbares Polyacrylat. Entsprechend werden als Monomere oder Comonomere bevorzugt funktionelle, mit Epoxidgruppen vernetzungsfähige Monomere eingesetzt, hier kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist.

Weitere Monomere, die als Comonomere für das Polyacrylat verwendet werden können, sind zum Beispiel Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und ein oder zwei Doppelbindungen oder Mischungen dieser Monomeren.

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen sind, zum Beispiel Tetrahydrofufurylacrylat, N-tert-Butylacrylamid, Allylacrylat wobei diese Aufzählung nicht abschließend ist.

Das Polyacrylat kann optional auch mit anderen Polymeren geblendet beziehungsweise abgemischt werden. Hierzu eignen sich unter anderem Polymere auf Basis von Naturkautschuk, Synthesekautschuk, Styrolblock-Copolymeren, EVA, Siliconkautschuk, Acrylkautschuk, Polyvinylether.

Bevorzugt weist die Haftklebemasse Vernetzer auf Epoxidbasis auf. Als epoxidgruppenhaltige Substanzen werden insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein.

Eine Klebemasse, die sich ebenfalls als geeignet zeigt, sind niedrigmolekulare Acrylatschmelzhaftklebemasse wie zum Beispiel acResin^{®} UV von BASF und Acrylatdispersionshaftklebmassen wie zum Beispiel unter dem Handelsnamen Acronal^{®} von der BASF erhältlich.

Ebenfalls bevorzugt wird eine Klebemasse verwendet, die aus der Gruppe der Naturkautschuke oder aus einem beliebigen Blend aus Naturkautschuken und Synthesekautschuken besteht, wobei der Anteil des Synthesekautschuk in dem Blend gemäß einer bevorzugten Variante höchstens so groß wie der Anteil des Naturkautschuks ist. Auch andere Elastomere können der Klebemasse zugesetzt sein.

(Natur-)Kautschukklebemassen zeigen eine gute Kombination aus Klebkraft, Tack und Kohäsion sowie ausgewogenes Klebverhalten auf nahezu allen relevanten Haftuntergründen und sind somit prädestiniert. Allgemeine Informationen zu Kautschukklebemassen sind unter anderem Standardwerken für Klebebänder wie beispielsweise dem "Handbook of Pressure Sensitive Adhesive Technology" von Donatas Satas zu entnehmen.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, EthylenVinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM. Daneben hat sich ein 100%-System auf Styrol-Isopren-Styrol (SIS) oder SEBS als geeignet erwiesen.

Eine Vernetzung kann thermisch oder durch Bestrahlung mit UV-Licht oder Elektronenstrahlen erfolgen. Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar. Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C. Die thermische Anregung der Vernetzer kann auch durch IR-Strahlen oder hochenergetische Wechselfelder erfolgen.

Schließlich sei erwähnt, dass auch auf Silikon, Polyurethan oder Polyolefin basierende Klebemassen geeignet sind.

Zur Optimierung der Eigenschaften kann die zum Einsatz kommende Selbstklebemasse mit Klebrigmachern (Harzen) und/oder einem oder mehreren Zuschlagstoffen wie Weichmachern, Füllstoffen, Pigmenten, Flammschutzmitteln, UV-Absorbern, Lichtschutz-, Alterungsschutz-, Vernetzungsmitteln, Vernetzungspromotoren oder Elastomeren abgemischt sein.

Unter der Bezeichnung "Klebharz", englisch "Tackifier Resins", versteht der Fachmann einen Stoff auf Harzbasis, der die Klebrigkeit erhöht.

Als Klebharze können beispielsweise als Hauptkomponente insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt C₈- und C₉-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C₈- und C₉-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C₅/C₉-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Hydrierte Kohlenwasserstoffharze sind als Abmischkomponente für vernetzbare Styrolblockcopolymere, wie beispielsweise in EP 0 447 855 A1, US 4,133,731 A und US 4,820,746 A beschrieben, besonders geeignet, da durch die Abwesenheit von Doppelbindungen die Vernetzung nicht gestört werden kann.

Darüber hinaus können aber auch nicht hydrierte Harze eingesetzt werden, wenn Vernetzungspromotoren wie zum Beispiel mehrfunktionelle Acrylate eingesetzt werden.

Besonders bevorzugt unter diesen Bedingungen ist der Einsatz von Terpenharzen auf der Basis von α-Pinen (Piccolyte A-Serie der Firma Hercules, Dercolyte A-Serie der Firma DRT), da diese neben einer hohen Kohäsion auch eine sehr hohe Adhäsion auch bei hohen Temperaturen gewährleisten, und/oder β-Pinen und/oder δ-Limonen.

Aber auch andere nicht hydrierte Kohlenwasserstoffharze, nicht hydrierte Analoga der oben beschriebenen hydrierten Harze, können eingesetzt werden. Durch die bevorzugte Verwendung von Vernetzungspromotoren ist ebenfalls der Einsatz von kolophoniumbasierenden Harzen möglich. Wegen ihrer geringen Adhäsion bei erhöhten Temperaturen werden diese hauptsächlich nur als Abmischkomponenten eingesetzt.

Bevorzugt geeignet sind unter anderem nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder β-Pinen und/oder δ-Limonen, hydrierte Polymerisate von bevorzugt reinen C₈- und C₉-Aromaten. Vorgenannte Klebharze können sowohl allein als auch im Gemisch eingesetzt werden.

Auf die Darstellung des Wissensstandes im "Handbook of Pressure Sensitive Adhesive Technology" von Donatas Satas (van Nostrand, 1989) sei ausdrücklich hingewiesen.

Geeignete pulver- und granulatförmige Füllstoffe, Farbstoffe und Pigmente sind beispielsweise Fasern, Ruß, Zinkoxid, Titandioxid, Mikrovollkugeln, Voll- oder Hohlglaskugeln, Kieselsäure, Silikate, Kreide, Titandioxid, Calciumcarbonat und/oder Zinkcarbonat.

Weiterhin können weitere Additive wie Flammschutzmittel, wie beispielsweise Ammoniumpolyphosphat, elektrisch leitfähige Füllstoffe (wie beispielsweise Leitruß, Kohlenstofffasern und/oder silberbeschichtete Kugeln), thermisch leitfähige Materialien (wie beispielsweise Bornitrid, Aluminiumoxid, Siliciumcarbid), ferromagnetische Additive (wie beispielsweise Eisen-(III)-oxide), Alterungsschutzmitteln, Lichtschutzmitteln, Ozonschutzmitteln und Compoundierungsmittel zugegeben werden. Geeignete Alterungsschutzmittel für die Klebemassen sind primäre Antioxidantien wie zum Beispiel sterisch gehinderte Phenole, sekundäre Antioxidantien wie zum Beispiel Phosphite oder Thiosynergisten (Thioether) und/oder Lichtschutzmittel wie zum Beispiel UV-Absorber oder sterisch gehinderte Amine.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Geeignete Vernetzungsmittel sind beispielsweise Phenolharze oder halogenierte Phenolharze, Melamin-, Formaldehydharze und Epoxide. Multifunktionelle Epoxide sind Oligomere des Epichlorhydrins, Epoxyether mehrwertiger Alkohole sowie deren Hydroxyethylether, Phenol-Formaldehyd-Kondensationsprodukte, wie Phenolalkohole, Phenolaldehydharze und ähnliche, S- und N-haltige Epoxide sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen erhältlich sind.

Geeignete Vernetzungspromotoren sind zum Beispiel Maleinimide, Allylester wie Triallylcyanurat, mehrfunktionelle Ester der Acryl- und Methacrylsäure.

Weiterhin können der Haftklebemasse Beschleuniger für die Vernetzungsreaktion mit den Epoxiden zugesetzt sein. Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Amingruppen aufweisen beziehungsweise multifunktionelle Amine und Diamine. Besonders bevorzugte Beschleuniger sind aber - insbesondere in Verbindung mit den vorgenannten Gründen - tertiäre Amine, wie beispielweise Triethylamin, Triethylendiamin, Benzyldimethylamin, Dimethylamino-methylphenol, 2,4,6-Tris-(N,N-dimethylamino-methyl)-phenol, N,N'-Bis(3-(dimethyl-amino)propyl)harnstoff. Geeignet sind ebenfalls Beschleuniger auf Phosphatbasis wie Phosphine und/oder Phos-phoniumverbindungen, wie beispielsweise Triphenylphosphin oder Tetraphenyl-phosphonium-tetraphenylborat.

Die aufgezählten Stoffe sind wiederum nicht zwingend, die Klebemasse funktioniert auch, ohne dass diese einzeln oder in beliebiger Kombination zugesetzt sind, also ohne Harze und/oder restliche Zuschlagstoffe.

Die Auftragsstärke der Klebemasse liegt je Schicht vorzugsweise im Bereich von 5 bis 250 g/m², insbesondere von 15 bis 100 g/m², weiter vorzugsweise im Bereich von 15 bis 60 g/m².

Die Herstellung und Verarbeitung der Haftklebemassen kann aus Lösung, Dispersion sowie aus der Schmelze erfolgen.

Die so hergestellten Haftklebmassen können dann mit den allgemein bekannten Verfahren auf den Träger gebracht werden. Bei Verarbeitung aus der Schmelze können dies Auftragsverfahren über eine Düse oder einen Kalander sein. Eine derartige Verarbeitung einer Acrylathaftklebemasse aus der Schmelze ist in der WO 2006/027387 A1 dargelegt, auf deren Inhalt hiermit Bezug genommen wird und deren Inhalt Teil dieser Offenbarung und Erfindung wird.

Bei Verfahren zur Aufbringung der Klebmasse aus der Lösung sind Beschichtungen mit Rakeln, Messern oder Düsen bekannt, um nur einige wenige zu nennen.

### Herstellung Klebeband

Im Falle der einseitigen Beschichtung mit Klebmasse kann auf der Rückseite der Trägerfolie ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv (antiadhäsiv) wirkende Stoffe ausgerüstet sein.

Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C14- bis C28-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew.-%, besonders bevorzugt 13 bis 18 Gew.-% des trennwirksamen Bestandteils.

### Releaseliner

Zum Schutz der offenen Haftklebemasse wird diese bevorzugt mit einer oder mehreren Trennfolien und/oder Trennpapieren abgedeckt. Als Trennpapiere können zum Beispiel Glassine-, HDPE- oder LDPE-beschichtete Trennpapiere eingesetzt werden, die jeweils in einer sehr bevorzugten Auslegung eine Beschichtung aus Polydimethylsiloxan als Trennlage aufweisen. In einer weiteren bevorzugten Ausführungsform der Erfindung wird eine Trennfolie eingesetzt. Die Trennfolie weist bevorzugt ein- oder beidseitig eine Beschichtung aus Polydimethylsiloxan als Trennmittel auf. Als Folienmaterialien lassen sich die typischen Polymerfolien einsetzen. Besonders bevorzugt werden Polyester (zum Beispiel PET) oder Polyolefin (zum Beispiel PP, MOPP, BOPP, PE) Folien eingesetzt.

Schließlich betrifft die vorliegende Erfindung die Verwendung des erfindungsgemäßen Klebebandes in der Elektro- und Automobilindustrie. In der Elektroindustrie erfolgt eine Verwendung zur Verklebung von Komponenten in elektronischen Geräten, in der Automobilindustrie werden erfindungsgemäße Klebebänder insbesondere als Maskierungsklebeband bei der Lackierung von Fahrzeugen eingesetzt.

Die PET-Trägerfolie des erfindungsgemäßen Klebebands weist eine derart deutlich verbesserte Spaltfestigkeit auf, und zwar auch dann, wenn die Trägerfolie mit Pigmenten gefärbt ist oder sonstige Zusätze wie Füllstoffe enthält, dass eine sichere Verwendung des Klebebandes auch bei den besonderen eingangs geschilderten Anforderungen bei der Verklebung hochwertiger Elektroartikel oder als Maskingklebeband für die Lackierung von Fahrzeugkarosserien möglich ist. Bei letzterem gilt dies auch insbesondere für solche Maskingklebebänder die längere Zeit erheblicher Temperaturbelastung der beim Einbrennen (Aushärten) der Automobillackschichten ausgesetzt sind. Das erfindungsgemäße Klebeband weist ebenfalls eine deutliche Verbesserung bezüglich Spaltfestigkeit bei niedrigen Temperaturen auf. Das ist besonders von Vorteil bei zum Beispiel Transportsicherungstapes für zum Beispiel Kühlschränke oder andere elektrische Geräte. Hier ist eine wichtige Anforderung, dass das Klebeband auch bei niedrigen Temperaturen von zum Beispiel 0 °C rückstandsfrei also ohne Spaltung des Trägers von den Bauteilen abgezogen werden kann.

### Prüfmethoden

### 180° Klebkrafttest (Messmethode H1):

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zehnmal mit einem Anpressdruck entsprechend einem Gewicht von 1 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei 23 °C und 50 % relativer Feuchte durchgeführt. Die Messergebnisse sind in N/cm angegeben und sind gemittelt aus drei Messungen.

### Testmethoden Folieneigenschaften

Die Bestimmung der mechanischen Eigenschaften erfolgt nach DIN EN ISO 527-3. Der Schrumpf der Folie erfolgt nach DIN 53377.

### Transmission

Die Transmission der Folien wurde mit einem UV/Vis-Spektrometer Specord 250 PLUS der Firma Analytik Jena gemessen. Der Wellenlängenbereich erstreckte sich von 360 bis 1100 nm. Es wurde mit einer Auflösung von 1 nm gemessen. Zur Beurteilung der Transmission wird der Wert bei einer Wellenlänge von 550 nm angegeben.

### SV-Werte (Standard Viskosität)

Die Standardviskosität SV (DCE) wird, angelehnt an DIN 53726, in Dichloressigsäure bei einer Temperatur von 25 °C gemessen.

### Gelpermeationschromatoaraphie GPC

Die Angaben des gewichtsmittleren Molekulargewichtes M_{w} und der Polydispersität PD in dieser Schrift beziehen sich auf die Bestimmung per Gelpermeationschromatographie. Die Bestimmung erfolgt an 100 µL klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5µ, 10³ Å, ID 8,0 mm x 50 mm verwendet. Zur Auftrennung werden die Säulen des Typs PSS-SDV, 5µ, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung).

### Beurteilung des Spaltverhaltens der Folien

Die Messungen werden bei einem Prüfklima von 23 ± 1 °C und 50 ± 5 % rel. Luftfeuchte durchgeführt. Die bevorzugte Ausführung des erfindungsgemäßen Klebebandes weist bei diesem Test kein Folienspalten auf.

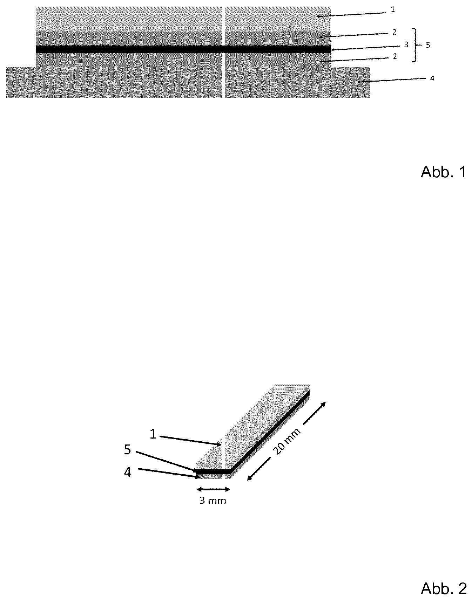

Zur Probenvorbereitung wird das zu testende einseitig eingedeckte doppelseitige Klebeband (5), bestehend aus Haftklebmasse (2) und einer PET-Folie (3) mit der offenen klebenden Seite inklusive Liner (1) auf einen weiteren Papier- oder Folienliner (4) geklebt (Abb. 1). Diese Maßnahme soll die untere und obere klebende Seite des Klebebandes bei der weiteren Probenvorbereitung vor Verunreinigungen jeglicher Art schützen.

Aus diesem doppelt eingedeckten Klebeband werden Prüflinge (5) ausgeschnitten (rechteckig, 20 mm lang und 3 mm breit) (Abb. 2). Die Prüflinge zur Ermittlung der Spaltfestigkeit müssen dabei mit scharfen Klingen zugeschnitten werden. Die Prüflinge können darüber hinaus auch mittels geeignetem Laser ausgeschnitten werden.

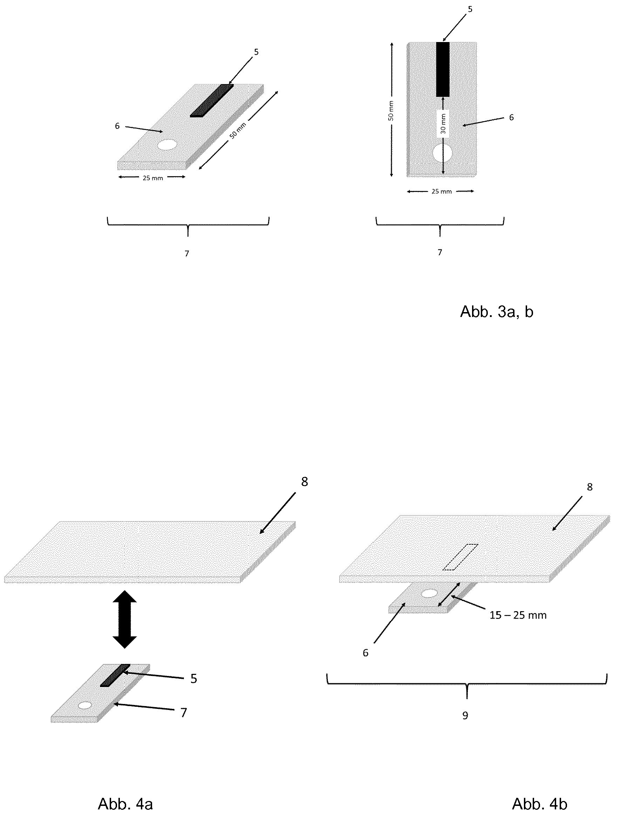

Bei den so erhaltenen Mustern wird von einer Seite ein Liner (1 oder 4) entfernt und der Prüfling (5) bündig zur unteren Kante auf die zuvor geprimerte Seite (zum Beispiel mit dem handelsüblichen Primer 3M 94 Primer mit einem geeigneten Tuch auftragen und 15 Min trocknen lassen) der Stahl-Prüfplatte (2 x 25 x 50 mm) (6) durch leichtes vollflächiges Überstreichen aufgeklebt (Abb. 3a, b). Die Stahl-Prüfplatte weist ein an einer Seite ein entsprechend großes Loch auf, um das bei der Prüfung benötigte Gewicht anzuhängen.

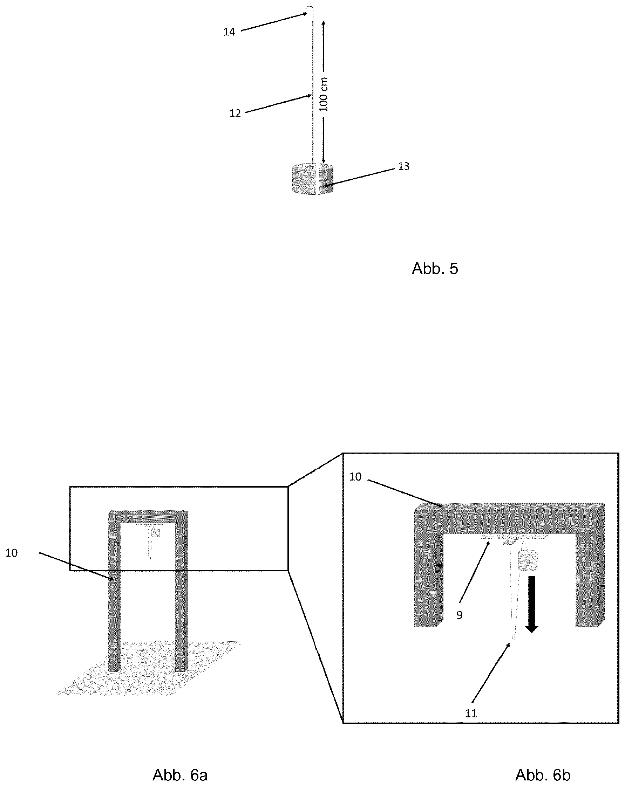

Der verbleibende Liner (1 oder 4) wird entfernt und der gesamte Prüfaufbau (7) auf die geschliffene und zuvor geprimerte Seite (3M 94 Primer mit einem geeigneten Tuch auftragen und 15 Min trocknen lassen) einer ASTM-Stahlplatte (8) (Werkstoff Nr. 1.4301, DIN EN 10088-2, Oberfläche 2R) geklebt. Dabei muss die Prüfplatte (6) mindestens 15 mm und höchstens 25 mm über den Rand der Prüfplatte hinausragen (Abb. 4). Der gesamte Aufbau (9) wird in mit geeigneten Befestigungsmethoden unter einen starren feststehenden nicht beweglichen Rahmen (10) fixiert (Abb. 5).

Das Prüfgewicht (11) besteht aus einem Stahlseil (100 cm, Stärke mindestens 3 mm) (12), einem Metallgewicht (500 g) (13) und einer geeigneten Befestigungsmöglichkeit (14) zur Befestigung an dem Prüfkörper. Es ist darauf zu achten, dass das Prüfgewicht (11) und die Befestigungsmöglichkeit (14) jeweils fest mit dem Stahlseil verbunden sind, um eine konstante Kraftübertragung zum Prüfkörper (5) zu gewährleisten. An der Öffnung des Prüfplatte (6) wir das Prüfgewicht mittels der geeigneten Befestigungsmöglichkeit angebracht. Es ist darauf zu achten, dass während der Befestigung des Prüfkörpers bis zum eigentlichen Test maximal das Gewicht des durchhängenden Prüfseils auf den Prüfkörper wirkt (Abb. 6 a und b).

Nachdem das Prüfseil an der Prüfplatte (6) befestigt wurde, wird das Prüfgewicht auf exakt die Höhe des Prüfaufbaus (9) gehoben und senkrecht frei fallen gelassen. Dabei wird der Prüfaufbau (9), welcher durch den Prüfling (5) verbunden ist, zerstört, und das Bruchbild des doppelseitigen Klebebandes (5) kann beurteilt werden.

Zur Beurteilung des Spaltverhaltens werden nach der oben beschriebenen Methode jeweils 10 Prüfkörper des zu prüfenden doppelseitigen Klebändern hergestellt und wie oben beschrieben getestet. Das Bruchbild wird dabei in Folienspalten (SPV F) (Folienspalten in X % der gesamten Tests), Adhäsionsbruch zur ASTM Platte (AHB ASTM P), Adhäsionsbruch zur Prüfplatte (AHB PP), Adhäsionsbruch zwischen Klebemasse und Folie (AHB F) sowie Spaltfläche Folie (Wie viel % der Folienfläche ist gespalten) (SPF F) und Kohäsionsbruch der Haftklebemasse (KHB PSA) unterteilt.

Im Folgenden wird die Erfindung durch einige Beispiele näher erläutert, ohne die Erfindung damit einschränken zu wollen.

### Beispiele

### Folienherstellung

Das Verfahren zur Herstellung der erfindungsgemäßen Folien umfasst folgende Schritte:
- Herstellen einer mehrschichtigen Folie aus einer Basisschicht (B) und mindestens einer Deckschicht (A) durch Coextrusion und Ausformen der Schmelzen zu einem flachen Schmelzefilm, sowie im Anschluss daran
- Herstellen einer vorgefertigten Folie durch Abkühlen des Schmelzefilms auf einer Abzugswalze,
- biaxiales Strecken der vorgefertigten Folie in Längs- und Querrichtung und
- Thermofixieren der biaxial gestreckten Folie.

Bei der Folienherstellung ist gewährgeleistet, dass das zum Beispiel als Verschnitt anfallende Regenerat, in einer Konzentration von ca. 20 bis 60 Gew.-%, bezogen auf das Gesamtgewicht der Folie, dem Extrusionsprozess wieder zugeführt werden kann, ohne dass dabei die physikalischen Eigenschaften der Folie negativ beeinflusst werden.

### Verwendete Rohstoffe zur Folienherstellung.

Alle Rohstoffe sind antimonfrei, d.as heißt, es wurden keine Antimonverbindungen, sondern Titanverbindungen als Umesterungskatalysatoren verwendet.

A= Polyethylenterephthalatrohstoff mit einem SV-Wert von 820.

B= 99 Gew.-% Polyethylenterephthalatrohstoff mit einem SV von 810 und 1 Gew.-% Siliziumdioxid (Sylobloc 44H, Firma Grace Deutschland) mit einem d₅₀ 2,55 µm, das Sylobloc wurde dem Polyester während der Polykondensation zugeführt.

C= 80 Gew.-% Polyethylenterephthalatrohstoff mit einem SV-Wert von 820 und 20 Gew.- % des Rußes Printex F85 der Firma Orion Engineered carbons GmbH, Deutschland, hergestellt durch das Einarbeiten des Rußes in den PET-Rohstoff mittels Zweischneckenextruder. Eigenschaften des Rußes: BET 200 m²/g, OA 54 ml/100 g gemessen mit DBP, die durchschnittliche Partikelgröße der Partikel beträgt 16 nm, Gehalt an relevanten Schwermetallen < 6 ppm.

D= 87,5 Gew.-% Polybutylenterephthalatrohstoff mit einem SV-Wert von 700 und 12,5 Gew.-% des Rußes Printex F85 der Firma Orion Engineered carbons GmbH, Deutschland, hergestellt durch das Einarbeiten des Rußes in den PBT-Rohstoff mittels Zweischneckenextruder. Eigenschaften des Rußes: BET 200 m²/g, OAN 54 ml/100 g gemessen mit DBP, die durchschnittliche Partikelgröße der Partikel beträgt 16 nm, Gehalt an relevanten Schwermetallen < 6 ppm.

E= 50 Gew.-% Polyethylenterephthalatrohstoff mit einem SV-Wert von 800 und 50 Gew.-% Titandioxid vom Rutiltyp (Typ R-104 der Firma DuPont) mit einer durchschnittlichen Partikelgröße von 0,3 µm, hergestellt durch das Einarbeiten des Rußes in den PET-Rohstoff mittels Zweischneckenextruder

F= 50 Gew.-% Polybutylenterephthalatrohstoff mit einem SV-Wert von 700 und 50 Gew.-% Titandioxid (Typ R-104 von DuPont) vom Rutiltyp mit einem mittleren Teilchendurchmesser von 0,3 µm, hergestellt durch das Einarbeiten des Rußes in den PBT-Rohstoff mittels Zweischneckenextruder

G= Polybutylenterephthalat mit einem SV-Wert von 700.

### Schwarze Folien

Es wurden drei Polymermischungen in drei Zweischneckenextrudern bei 280 bis 290 °C aufgeschmolzen. Die Polymermischungen wurden in einem Adapter zusammengeführt und durch eine Breitschlitzdüse auf eine auf 40 °C temperierte Kühlwalze elektrostatisch als Folie angelegt. Anschließend wurde sie bei folgenden Bedingungen unmittelbar hintereinander zunächst längs- und anschließend quergestreckt.

**Tabelle 1**

| | | | |
|---|---|---|---|
| MD-Verstreckung | Aufheiztemperatur | 75 bis 115 | °C |
| | Strecktemperatur | 115 | °C |
| | Längsstreckverhältnis | 3,6 | |
| CD-Verstreckung | Aufheiztemperatur | 100 | °C |
| | Strecktemperatur | 110 | °C |
| | Querstreckverhältnis | 4 | |
| Fixierung | Temperatur | 237 - 150 | °C |
| | Dauer | 3 | S |
| | Relaxation | 4,5 | % |

### Folienbeispiel ( F1) (schwarz)

### Dreischichtfolie ABA

Außenschichten bestehend aus 95 Gew.-% Rohstoff A und 5 Gew.-% Rohstoff B. Die Dicke der Außenschichten in der Endfolie beträgt 1 µm. Basisschicht bestehend aus 92 Gew.-% Rohstoff A und 8 Gew.-% Rohstoff D. Die Dicke der Basisschicht in der Endfolie beträgt 10 µm.

**Tabelle 2**

| | | F1 |
|---|---|---|
| Gesamtdicke | µm | 12 |
| Schrumpf MD | % | 1,5 |
| Schrumpf CD | % | 0 |
| E-Modul MD | N/mm² | 4100 |
| E-Modul CD | N/mm² | 4450 |
| Transparenz | % | 2,85 |

### Vergleichsbeispiel (V1) (schwarz)

### Dreischichtfolie ABA

Außenschichten bestehend aus 95 Gew.-% Rohstoff A und 5 Gew.-% Rohstoff B. Dicke der Außenschichten in der Endfolie beträgt 1 µm. Basisschicht bestehend aus 95 Gew.-% Rohstoff A und 5 Gew.-% Rohstoff C. Dicke der Basisschichten in der Endfolie beträgt 10 µm.

**Tabelle 3**

| | | V1 |
|---|---|---|
| Gesamtdicke | µm | 12 |
| Schrumpf MD | % | 1,5 |
| Schrumpf CD | % | 0 |
| E-Modul MD | N/mm² | 4100 |
| E-Modul CD | N/mm² | 4500 |
| Transparenz | % | 2,95 |

### Beispiel weiße Folien

Es wurden drei Polymermischungen in drei Zweischneckenextrudern bei 280 bis 290 °C aufgeschmolzen. Die Polymermischungen wurden in einem Adapter zusammengeführt und durch eine Breitschlitzdüse auf eine auf 40 °C temperierte Kühlwalze elektrostatisch als Folie angelegt. Anschließend wurde sie bei folgenden Bedingungen unmittelbar hintereinander zunächst längs- und anschließend quergestreckt.

**Tabelle 4**

| | | | |
|---|---|---|---|
| MD-Verstreckung | Aufheiztemperatur | 70 -120 | °C |
| | Strecktemperatur | 115 | °C |
| | Längsstreckverhältnis | 3,2 | |
| CD-Verstreckung | Aufheiztemperatur | 80 - 135 | °C |
| | Strecktemperatur | 135 | °C |
| | Querstreckverhältnis | 3,8 | |
| Fixierung | Temperatur | 230 | °C |
| | Dauer | 3 | S |
| | Relaxation | 4,0 | % |

### Folienbeispiel (F2) (weiß)

### Dreischichtfolie ABA

Außenschichten bestehend aus 87 Gew.-% Rohstoff A und 13 Gew.-% Rohstoff B. Dicke der Außenschichten in der Endfolie beträgt 2 µm. Basisschicht bestehend aus 87 Gew.-% Rohstoff A und 13 Gew.-% Rohstoff F. Dicke der Basisschichten in der Endfolie beträgt 56 µm.

**Tabelle 5**

| | | F2 |
|---|---|---|
| Gesamtdicke | µm | 60 |
| Schrumpf MD | % | 1,3 |
| Schrumpf CD | % | 0 |
| E-Modul MD | N/mm² | 4000 |
| E-Modul CD | N/mm² | 4300 |
| Transparenz | % | 28 |

### Vergleichsbeispiel (V2) (weiß)

### Dreischichtfolie ABA

Außenschichten bestehend aus 87 Gew.-% Rohstoff A und 13 Gew.-% Rohstoff B. Dicke der Außenschichten in der Endfolie beträgt 2 µm.

Basisschicht bestehend aus 87 Gew.-% Rohstoff A und 13 Gew.-% Rohstoff E. Dicke der Basisschicht in der Endfolie beträgt 56 µm.

**Tabelle 6**

| | | V2 |
|---|---|---|
| Gesamtdicke | µm | 60 |
| Schrumpf MD | % | 1,3 |
| Schrumpf CD | % | 0 |
| E-Modul MD | N/mm² | 3900 |
| E-Modul CD | N/mm² | 4250 |
| Transparenz | % | 27 |

### Transparente Folien

Es wurden drei Polymermischungen in drei Zweischneckenextrudern bei 280 bis 290 °C aufgeschmolzen. Die Polymermischungen wurden in einem Adapter zusammengeführt und durch eine Breitschlitzdüse auf eine auf 40 °C temperierte Kühlwalze elektrostatisch als Folie angelegt. Anschließend wurde sie bei folgenden Bedingungen längs- und quergestreckt.

**Tabelle 7**

| | | | |
|---|---|---|---|
| MD-Verstreckung | Aufheiztemperatur | 75 -115 | °C |
| | Strecktemperatur | 115 | °C |
| | Längsstreckverhältnis | 3,6 | |
| CD-Verstreckung | Aufheiztemperatur | 100 | °C |
| | Strecktemperatur | 110 | °C |
| | Querstreckverhältnis | 4 | |
| Fixierung | Temperatur | 237 - 150 | °C |
| | Dauer | 3 | S |
| | Relaxation | 4,5 | % |

### Folienbeispiel (F3)

### Dreischichtfolie ABA

Außenschichten bestehend aus 95 Gew.-% Rohstoff A und 5 Gew.-% Rohstoff B. Dicke der Außenschichten in der Endfolie beträgt 1 µm.

Basisschicht bestehend aus 93 Gew.-% Rohstoff A und 7 Gew.-% Rohstoff G. Dicke der Basisschichten in der Endfolie beträgt 10 µm.

**Tabelle 8**

| | | F3 |
|---|---|---|
| Gesamtdicke | µm | 12 |
| Schrumpf MD | % | 1,2 |
| Schrumpf CD | % | 0,2 |
| E-Modul MD | N/mm² | 4640 |
| E-Modul CD | N/mm² | 4580 |
| Transparenz | % | 92 |

### Vergleichsbeispiel 3 (V3)

### Dreischichtfolie ABA

Außenschichten bestehend aus 95 Gew.-% Rohstoff A und 5 Gew.-% Rohstoff B. Dicke der Außenschichten in der Endfolie beträgt 1 µm.

Basisschicht bestehend aus 100 Gew.-% Rohstoff A. Dicke der Basisschichten in der Endfolie beträgt 10 µm.

**Tabelle 9**

| | | V3 |
|---|---|---|
| Gesamtdicke | µm | 12 |
| Schrumpf MD | % | 1,3 |
| Schrumpf CD | % | 0,3 |
| E-Modul MD | N/mm² | 4400 |
| E-Modul CD | N/mm² | 4310 |
| Transparenz | % | 93 |

### Beispiele Klebstoffe

Alle eingesetzten Chemikalien sind kommerziell erhältliche und in der folgenden Tabelle aufgelistet.

**Tabelle 10**

| *Chemische Verbindung* | *Handelsname* | *Hersteller* | *CAS-Nr.* |
|---|---|---|---|
| Bis-(4-tert-butylcyclohexyl)peroxydicarbonat | Perkadox^{®} 16 | Akzo Nobel | 15520-11-3 |
| 2-Ethylhexylacrylat | 2-Ethylhexylacrylate | Brenntag | 103-11-7 |
| n-Butylacrylat | n-Butylacrylat | Rohm & Haas | 141-32-2 |
| Acrylsäure | Acrylsäure | BASF | 79-10-7 |
| Klebharz auf Terpen-Phenolbasis | Sylvares^{®} TP 95 | Arizona Chemicals | |
| Tetraglycidyl meta-Xylendiamine | Erisys GA 240 | CVC Specialty Chemicals Inc. | 63738-22-7 |
| 2,2'-Azobis(2-methylpropionitril), AIBN | Vazo^{®} 64 | DuPont | 78-67-1 |

Im Folgenden wird die Präparation des Ausgangspolymers beschrieben. Die untersuchten Polymere werden konventionell über eine freie radikalische Polymerisation in Lösung hergestellt.

### Basispolymer BP1

Ein für radikalische Polymerisationen konventioneller Reaktor wurde mit 47,5 kg 2-Ethylhexylacrylat, 47,5 kg n-Butylacrylat, 5 kg Acrylsäure und 66 kg Aceton/Isopropanol (92,5:7,5) befüllt. Nach 45 minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Aceton/Isopropanol Gemisch verdünnt.

Nach 5,5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat ein mittleres Molekulargewicht von Mw = 386.000 g/mol, Polydispersität PD (Mw/Mn) = 7,6.

### Abmischung der PSA und Herstellung des doppelseitigen Klebebands

### PSA 1

Zu dem Basispolymer BP1 wird, bezogen auf das Trockengewicht des Polymers, 40 Gew.-% des Harzes TP 95 gegeben. Durch die Zugabe von Benzin wird ein Feststoffgehalt von 38 % eingestellt. Die Mischung aus Polymer und Harz wird solange gerührt bis sich das Harz sichtbar vollständig gelöst hat. Im Anschluss werden, bezogen auf das Trockengewicht des Polymers 0,075 Gew.-% des kovalenten Vernetzens Erysis GA 240 zugegeben. Die Mischung wird für 15 Minuten bei Raumtemperatur gerührt. Die homogene Klebmasse wird auf die Folien F1, F2 F3, V1, V2 und V3 beschichtet. Die Folien werden unmittelbar vor der Beschichtung beidseitig mit Corona vorbehandelt. Die Coronadosis wird so gewählt, dass die Folien direkt nach der Coronabehandlung eine Oberflächenenergie von >52 mN/cm aufweist. Die Folien wurde beidseitig mit jeweils 100 g/m² der Acrylathaftklebemasse PSA 1 beschichtet.

Die klebtechnischen Eigenschaften der doppelseitigen Klebebänder auf verschiedenen Standarduntergründen wird mittels Messmethode H1 sind in Tabelle 11 wiedergegeben.

**Tabelle 11**

| | Einheit | PSA1 |
|---|---|---|
| Klebkraft Stahl | [N/cm] | 12,5 |
| Klebkraft Glas | [N/cm] | 14,6 |
| Klebkraft Polycarbonat | [N/cm] | 12 |

### Ergebnisse Split Test

Zur Beurteilung des Spaltverhaltens werden die einzelnen doppelseitigen Klebebänder wie oben beschrieben getestet. Alle Ergebnisse der Versagensflächen werden in % angegeben.

**Tabelle 12**

| Masse | Folie | SPV F | SPF F | KHB | AHB | AHB | AHB |
|---|---|---|---|---|---|---|---|
| | | | | PSA | ASTM P | PP | F |
| PSA 1 | F1 | 0 | 0 | 0 | 95 | 5 | 0 |
| PSA 1 | F2 | 0 | 0 | 0 | 60 | 40 | 0 |
| PSA 1 | F3 | 0 | 0 | 0 | 90 | 10 | 0 |
| PSA 1 | V1 | 100 | 70 | 0 | 30 | 0 | 0 |
| PSA 1 | V2 | 70 | 40 | 0 | 40 | 20 | 0 |
| PSA 1 | V3 | 20 | 10 | 0 | 60 | 30 | 0 |

| | | | | | | | |
|---|---|---|---|---|---|---|---|
| SPV F = Spaltverhalten Folie (Folienspalten in X % der gesamten Tests) SPF F = Spaltfläche Folie (Wie viel % der Folien ist gespalten) KHB PSA = Kohäsionsbruch innerhalb der Klebemasse AHB ASTM P = Adhäsionsbruch zur ASTM Platte AHB PP = Adhäsionsbruch zur Prüfplatte AHB F = Adhäsionsbruch zwischen Klebemasse und Folie | | | | | | | |

Die Ergebnisse des Splittestes verdeutlichen, dass nur die Kombination aus stark klebenden Klebemassen und schlagzähmodifizierter biaxial verstreckter Polyesterfolien (Folien F1 bis F3) ein Folienspalten in doppelseitigen Klebebändern bei starker schlagartiger Belastung verhindert werden kann. Ebenfalls wird an den Beispielen V1 bis V3 der negative Einfluss von anorganischen Pigmenten deutlich.

## Patentansprüche

1. Klebeband enthaltend eine Trägerfolie, umfassend mindestens eine Folienschicht, und mindestens eine Klebemassenschicht,
wobei die Trägerfolie biaxial verstreckt ist und mindestens eine der mindestens einen Folienschicht 80 bis 99 Gew.-% Polyethylenterephthalat als Basispolymer und 1 bis 20 Gew.-%, vorzugsweise 2 bis 15 Gew.-%, insbesondere 5 bis 10 Gew.-%, eines Additivpolymers, nämlich ein Homo- oder Copolymerisat von Polybutylenterephthalat, enthält, wobei die Gewichtsanteile jeweils auf die Polymerkomponente bezogen sind, das Additivpolymer eine Glasübergangstemperatur T_{G} aufweist, die mindestens 10 K, vorzugsweise mindestens 20 K, unter der Glasübergangstemperatur T_{G} von Polyethylenterephthalat liegt,
**dadurch gekennzeichnet, dass**
die mindestens eine Folienschicht des Weiteren mindestens ein Farbpigment enthält.

2. Klebeband nach Anspruch 1, **dadurch gekennzeichnet, dass** das Farbpigment ausgewählt ist aus der Gruppe bestehend aus Ruß, Titandioxid, schwarzes Eisen(II,III)Oxid, Carbonnanotubes, Bariumsulfat, Zinksulfid und Zinkoxid, wobei Ruß und Titandioxid besonders bevorzugt sind.

3. Klebeband nach Anspruch 1 oder 2, **dadurch gekennzeichnet, dass** der Anteil an Farbpigment in der Folienschicht von 0,5 bis 10 Gew.-%, vorzugsweise 1 bis 8 Gew.-%, bezogen auf das Gesamtgewicht der Folienschicht, beträgt.

4. Klebeband nach einem der vorherigen Ansprüche, **dadurch gekennzeichnet, dass** die Klebemasse eine Haftklebemasse ist.

5. Klebeband nach einem der vorherigen Ansprüche, **dadurch gekennzeichnet, dass** die Trägerfolie eine Dicke von 2 bis 250 µm, insbesondere von 5 bis 40 µm, aufweist.

6. Verwendung des Klebebandes nach einem der vorangehenden Ansprüche für die Verklebung von elektronischen Geräten oder als Maskierungsklebeband für die Lackierung von Fahrzeugen.

## Claims

1. An adhesive tape containing a carrier film, comprising at least one film layer and at least one adhesive compound layer,
wherein the carrier film is biaxially orientated and at least one of the at least one film layers contains 80 to 99% by weight of polyethylene terephthalate as the base polymer and 1 to 20% by weight, preferably 2 to 15% by weight, in particular 5 to 10% by weight, of an additive polymer, namely a homopolymer or copolymer of polybutylene terephthalate, wherein the proportions by weight are in each case with respect to the polymer component, the additive polymer has a glass transition temperature T_{G} which is at least 10K, preferably at least 20K, below the glass transition temperature T_{G} of polyethylene terephthalate,
**characterized in that** the at least one film layer furthermore contains at least one coloured pigment.

2. The adhesive tape as claimed in claim 1, **characterized in that** the coloured pigment is selected from the group consisting of carbon black, titanium dioxide, black iron (II, III) oxide, carbon nanotubes, barium sulphate, zinc sulphide and zinc oxide, wherein carbon black and titanium dioxide are particularly preferred.

3. The adhesive tape as claimed in claim 1 or claim 2, **characterized in that** the proportion of coloured pigment in the film layer is from 0.5 to 10% by weight, preferably 1 to 8% by weight, based on the total weight of the film layer.

4. The adhesive tape as claimed in one of the preceding claims, **characterized in that** the adhesive compound is a pressure-sensitive adhesive.

5. The adhesive tape as claimed in one of the preceding claims, **characterized in that** the carrier film has a thickness of 2 to 250 µm, in particular 5 to 40 µm.

6. Use of the adhesive tape as claimed in one of the preceding claims for bonding electronic devices or as adhesive masking tape for the painting of vehicles.

## Revendications

1. Ruban adhésif contenant un film protecteur, comprenant au moins une couche de film et au moins une couche de masse d'adhésif,
le film protecteur étant orienté biaxialement, et au moins une parmi l'au moins une couche de film contenant 80 à 99 % en poids de poly(téréphtalate d'éthylène) en tant que polymère de base et 1 à 20 % en poids, de préférence 2 à 15 % en poids, notamment 5 à 10 % en poids d'un polymère d'additif, s'agissant d'un produit d'homopolymerisation ou copolymérisation de poly(téréphtalate de butylène), les proportions pondérales étant toujours indiquées par rapport au constituant polymère concerné, le polymère d'additif présentant une température de transition vitreuse T_{G} qui est inférieure d'au moins 10 K, préférentiellement d'au moins 20 K, à la température de transition vitreuse T_{G} de poly(téréphtalate d'éthylène),
**caractérisé en ce qu'**au moins une couche de film contient en outre un pigment colorant.

2. Ruban adhésif selon la revendication 1, **caractérisé en ce que** ledit pigment colorant est choisi dans le groupe constitué par le noir de carbone, le dioxyde de titane, l'oxyde de fer (II, III) noir, les nanotubes de carbone, le sulfate de baryum, le sulfure de zinc et l'oxyde de zinc, s'agissant avec une préférence particulière de noir de carbone et de dioxyde de titane.

3. Ruban adhésif selon les revendications 1 ou 2, **caractérisé en ce que** la proportion de pigment colorant dans la couche de film est comprise entre 0,5 et 10 % en poids, de préférence entre 1 et 8 % en poids, par rapport au poids total de la couche de film.

4. Ruban adhésif selon l'une des revendications précédentes, **caractérisé en ce que** ladite masse d'adhésif est une masse d'adhésif sensible à pression.

5. Ruban adhésif selon l'une des revendications précédentes, **caractérisé en ce que** l'épaisseur du film protecteur est comprise entre 2 et 250 µm, notamment entre 5 et 40 µm.

6. Utilisation du ruban adhésif selon l'une des revendications précédentes pour coller des appareils électroniques ou en tant que ruban adhésif de masquage pour les travaux de peinture sur des véhicules.
